# EUROPÄISCHE PATENTSCHRIFT

(11) **EP 4 563 444 B1**
(45) Veröffentlichungstag und Bekanntmachung des Hinweises auf die Patenterteilung: **05.11.2025**
(21) Anmeldenummer: 24214825.2
(22) Anmeldetag: 22.11.2024
(51) Int. Cl.: B62D 3/12

(54) **VERFAHREN ZUR MESSUNG DER AUF EINE ZAHNSTANGE EINES LENKGETRIEBES EINES LENKSYSTEMS FÜR EIN KRAFTFAHRZEUG WIRKENDEN ZAHNSTANGENKRAFT UND LENKSYSTEM**
METHOD FOR MEASURING THE RACK FORCE ACTING ON A RACK OF A STEERING GEAR OF A STEERING SYSTEM FOR A MOTOR VEHICLE, AND STEERING SYSTEM
PROCÉDÉ DE MESURE DE LA FORCE DE CRÉMAILLÈRE AGISSANT SUR UNE CRÉMAILLÈRE D'UN MÉCANISME DE DIRECTION D'UN SYSTÈME DE DIRECTION POUR UN VÉHICULE AUTOMOBILE ET SYSTÈME DE DIRECTION

(30) Priorität: 28.11.2023 BE 202305962
(43) Veröffentlichungstag der Anmeldung: 04.06.2025
(73) Patentinhaber: thyssenkrupp Presta Aktiengesellschaft, 9492 Eschen (LI); thyssenkrupp AG, 45143 Essen (DE)
(72) Erfinder: Ficca, Riccardo, 6811 Göfis (AT); Raither, Wolfram, 9475 Sevelen (CH)
(74) Vertreter: thyssenkrupp Intellectual Property GmbH

(56) Entgegenhaltungen:
- KR-A- 20070 055 806
- KR-A- 20160 092 226

## Beschreibung

### Stand der Technik

Die Erfindung betrifft ein Verfahren zur Messung der auf eine Zahnstange eines Lenkgetriebes eines Lenksystems für ein Kraftfahrzeug wirkenden Zahnstangenkraft, bei dem die Zahnstange in dem Lenkgetriebe in Längsrichtung bewegbar ist und über mindestens eine Spurstange an mindestens ein lenkbares Rad gekuppelt ist.

In einem als Zahnstangenlenkung ausgebildeten Fahrzeug-Lenksystem greift ein in einem Lenkgetriebe drehend antreibbares Lenkritzel in eine lineare Verzahnung einer Zahnstange ein, die in dem Lenkgetriebe in der durch ihre Längsachse gegebenen Längsrichtung bewegbar gelagert ist. Ein drehender Antrieb des Lenkritzels, der manuell und motorisch unterstützt oder auch rein motorisch erzeugt werden kann, bewirkt eine translatorische Verlagerung der Zahnstange in Längsrichtung in dem Lenkgetriebe, welches an einem Karosserieteil der Fahrzeugkarosserie festgelegt ist. Die Zahnstange ist über mindestens eine, üblicherweise über zwei Spurstangen an Achsschenkeln von zu lenkenden Rädern angelenkt, so dass die translatorische Bewegung der Zahnstange in einen Lenkeinschlag der Räder umgesetzt wird.

Die zur Erzeugung eines Lenkeinschlags aufgebrachte Lenkkraft entspricht im Wesentlichen der in Längsrichtung auf die Zahnstange wirkenden Zahnstangenlast, die im Folgenden gleichbedeutend als Zahnstangenkraft bezeichnet wird. Diese ist von internen und externen Betriebsparametern abhängig, beispielsweise von der Lenkgeschwindigkeit, der Reibung im Lenkgetriebe, den Fahrbahnbedingungen und dergleichen.

Es können Fahrsituationen auftreten, in denen der Lenkeinschlag eines Rades erschwert oder blockiert wird, beispielsweise durch seitlichen Radkontakt mit einer Bordsteinkante, Bordsteinrempler oder dergleichen. Erfolgt in derartigen Situationen ein Lenkeingriff, können kurzzeitig hohe Kraftspitzen auftreten, die eine entsprechend hohe Zahnstangenkraft erzeugen. Um übermäßigen Verschleiß oder Überlastung zu vermeiden, ist es bekannt, die Zahnstangenkraft während des Fahrbetriebs zu erfassen und gegebenenfalls die Ansteuerung eines motorischen Antriebs der Lenkung zur Verringerung der Belastung anzupassen.

Ein Verfahren zur Bestimmung der Belastung des Lenksystems und der damit einhergehenden Zahnstangenlast ist in der DE 10 2019 133 870 A1 beschrieben. Darin wird vorgeschlagen, dass das Lenksystem eine Kraftmesseinrichtung aufweisen kann. Diese sieht vor, dass die wirkende Zahnstangenkraft mittels eines Zahnstangenkraftabschätzers unter Berücksichtigung einer Vielzahl von Parametern ermittelt wird, wie etwa Fahrerkraft, Hilfskraftantrieb-Motorkraft, Reibungs- und Massenträgheitskraft und gegebenenfalls weiteren relevanten Einflussgrößen. Nachteilig an diesem Verfahren ist die Fehleranfälligkeit beispielsweise im Hinblick auf toleranzbedingte Abweichungen, Alterung und dergleichen.

Weiter ist in der KR 20160092226 A vorgeschlagen worden, eine Kraftmesszelle in eine Spurstange einzugliedern. Nachteilig daran ist der aufwendige Aufbau mit mehreren Sensoren, die überdies an bewegten Bauteilen installiert sind. Eine ähnliche Anordnung ist in der CN 211308717 U beschrieben, welche dieselben Nachteile hat.

Angesichts der vorangehend erläuterten Problematik ist es eine Aufgabe der vorliegenden Erfindung, eine einfache und robuste Ermittlung der Zahnstangenkraft zu ermöglichen.

### Darstellung der Erfindung

Diese Aufgabe wird erfindungsgemäß gelöst durch das Verfahren mit den Merkmalen des Anspruchs 1 und das Lenksystem gemäß Anspruch 8. Vorteilhafte Weiterbildungen ergeben sich aus den Unteransprüchen.

Bei einem Verfahren zur Messung der auf eine Zahnstange eines Lenkgetriebes eines Lenksystems für ein Kraftfahrzeug wirkenden Zahnstangenkraft, bei dem die Zahnstange in dem Lenkgetriebe in Längsrichtung bewegbar ist und über mindestens eine Spurstange an mindestens ein lenkbares Rad gekuppelt ist, ist erfindungsgemäß vorgesehen, dass die Zahnstangenkraft als Reaktionskraft zwischen dem Lenkgetriebe und einem das Lenkgetriebe in Längsrichtung abstützenden Karosserieteil gemessen wird.

Das Verfahren betrifft den Betrieb einer Zahnstangenlenkung. Bevorzugt kann die Zahnstange über zwei mit ihren beiden Enden verbundene Spurstangen an zwei lenkbaren Rädern einer Fahrzeugachse angelenkt sein.

Bei dem erfindungsgemäßen Verfahren wird der Umstand ausgenutzt, dass die von dem Lenkgetriebe zur Erzeugung eines Lenkeinschlags der damit verbundenen lenkbaren Räder ausgeübte Lenkkraft als Reaktionskraft auf das Lenkgetriebe zurückwirkt, wobei von außen über die Räder und die Spurstangen von der Fahrbahn rückgekoppelte externe Kräfte, beispielsweise beim Kontakt mit einer Bordsteinkante oder beim Durchfahren eines Schlaglochs, ebenfalls in diese Reaktionskraft eingehen. Damit entspricht der Betrag dieser Reaktionskraft relativ realitätsnah und zuverlässig der tatsächlich an der Zahnstange anliegenden Zahnstangenkraft. Die Reaktionskraft entspricht der Summe der zwischen dem Lenksystem und dem Lenkgetriebe wirkenden Kräfte, das sind im Wesentlichen die über die Spurstangen und die Lenkwelle auf die Schnittstellen zum Lenkgetriebe ausgeübten Kräfte. Das Lenkgetriebe ist an einem Karosserieteil des Kraftfahrzeugs angebracht und relativ zu der Reaktionskraft abgestützt. Das Karosserieteil kann mit der Kraftfahrzeugkarosserie ausgebildet oder direkt oder mittelbar damit verbunden sein. Dadurch ist es möglich, aus der zwischen dem Lenkgetriebe und dem dieses tragenden Karosserieteils anliegenden Reaktionskraft direkt die Zahnstangenkraft zu ermitteln.

Ein Vorteil des erfindungsgemäßen Verfahrens ist, dass die gemessene Reaktionskraft unkompliziert als Maß für die tatsächlich anliegende Zahnstangenkraft genutzt werden kann. Dabei kann die Reaktionskraft eine einfache Kraftmessung zwischen dem Lenkgetriebe und dem Karosserieteil messtechnisch erfasst werden. Es ist keine aufwendige Abschätzung wie in dem eingangs genannten Stand der Technik erforderlich, und auch keine aufwendige und störanfällige Anbringung einer Mehrzahl von Kraftsensoren an den Spurstangen. Dadurch kann das erfindungsgemäße Verfahren baulich einfach und messtechnisch robust realisiert werden.

Es ist möglich, dass die Zahnstange manuell und/oder motorisch antreibbar ist. Die lineare Verlagerung der Zahnstange in dem Lenkgetriebe kann durch Drehung einer Lenkwelle erfolgen, die ein in die Zahnstange eingreifendes Lenkritzel aufweist. Dadurch kann ein Hilfskraftantrieb realisiert sein, bei dem zusätzlich zu einem manuellen Lenkmoment ein motorisches Hilfsmoment in die Lenkwelle eingekoppelt wird. Es kann auch vorgesehen sein, dass eine motorische Hilfskraft zum linearen Antrieb der Zahnstange direkt in das Lenkgetriebe eingebracht wird, d.h. nicht über die Lenkwelle. Alternativ kann das Lenkgetriebe als Steer-by-Wire-Aktuator ausgebildet sein, bei dem keine mechanische Verbindung mit einer manuellen Lenkeingabe vorhanden ist, und stattdessen ausschließlich ein elektrisch gesteuerter motorischer Linearantrieb der Zahnstange realisiert ist.

Es kann vorzugsweise vorgesehen sein, dass das Lenkgetriebe eine motorische Antriebseinheit aufweist. Diese dient zur motorischen Erzeugung der Zahnstangenkraft und kann bevorzugt einen elektrischen Motor mit einer rotierend antreibbaren Motorwelle umfassen, deren Rotation in eine Linearbewegung der Zahnstange umgesetzt wird. Hierzu kann eine an sich bekannte Getriebeanordnung vorgesehen sein, beispielsweise ein Spindeltrieb mit einer drehend antreibbaren Spindelmutter und einer mit der Zahnstange verbundenen Gewindespindel, oder ein Zahntrieb mit einem in eine Verzahnung der Zahnstange eingreifenden drehend antreibbaren Ritzel. Die motorische Antriebseinheit kann bevorzugt einschließlich des Motors und des Getriebes mit dem Lenkgetriebe baulich vereinigt ausgebildet sein.

Es kann mit Vorteil vorgesehen sein, dass die Reaktionskraft mittels mindestens eines elektrischen Kraftsensors gemessen wird. Dieser kann in an sich bekannte Weise Dehnungsmesstreifen, Piezoelemente oder dergleichen aufweisen. Mittels eines oder mehrerer Kraftsensoren kann die zwischen dem Lenkgetriebe und dem Karosserieteil anliegende Reaktionskraft zuverlässig mit geringem Aufwand gemessen werden. Vorzugsweise sind ein oder mehrere Kraftsensoren zur Erfassung der Kraft in Längsrichtung ausgebildet, zur Messung der in Längsrichtung wirkenden Zahnstangenkraft. Darüber hinaus können auch ein oder mehrere Kraftsensoren in Querrichtung, d.h. quer zur Längsrichtung angeordnet sein. Dadurch können auch auf die Zahnstange einwirkende Querkräfte überwacht werden. Dadurch können zuverlässig sämtliche Zahnstangenlasten erfasst werden.

Das Verfahren kann vorzugsweise dadurch realisiert sein, dass die Reaktionskraft an einem Befestigungsmittel gemessen wird, mit dem das Lenkgetriebe mit dem Karosserieteil verbunden ist. Das Befestigungsmittel dient zur mechanischen Verbindung des Lenkgetriebes mit dem Karosserieteil. Entsprechend werden praktisch die gesamten Reaktionskräfte über ein oder mehrere Befestigungsmittel übertragen. Es ist mit geringem Aufwand möglich, dass ein Befestigungsmittel einen elektrischen Kraftsensor aufweisen kann, oder selbst als ein solcher ausgebildet ist. Dabei ist es vorteilhaft, dass die Reaktionskraft an sämtlichen Befestigungsmitteln gemessen wird. Hierzu können diese jeweils mindestens einen Kraftsensor aufweisen.

Eine Ausführung des Verfahrens kann dadurch ermöglicht sein, dass das Lenkgetriebe elastisch verlagerbar an dem Karosserieteil gehalten ist und eine von der Reaktionskraft erzeugte bzw. davon abhängige relative Verlagerung zwischen dem Lenkgetriebe und dem Karosserieteil erfasst wird. Das Lenkgetriebe ist über eine elastische Lagerung mit dem Karosserieteil verbunden. Diese ist derart kalibriert, dass eine definierte, eindeutig mit der Größe der Reaktionskraft korrelierte Verlagerung relativ zum Karosserieteil erfolgt. Diese Verlagerung kann einfach und zuverlässig messtechnisch erfasst und zur Bestimmung der Reaktionskraft genutzt werden.

Gemäß einer vorteilhaften Weiterbildung des Verfahrens kann vorgesehen sein, dass die Reaktionskraft ausgewertet wird zur Detektierung einer Überlastung. Eine Überlastung liegt vor, wenn die auf das Lenkgetriebe wirkende, erfindungsgemäß gemessene Reaktionskraft, einen kritischen Grenzwert überschreitet.

Ein kritischer Grenzwert kann beispielsweise durch eine maximale Belastbarkeit der Spurstangen, des Lenkgetriebes oder sonstiger im Kraftfluss zwischen dem Lenkgetriebe und den lenkbaren Rädern eingegliederter Bauelemente definiert sein. Eine Überschreitung des kritischen Grenzwerts, beispielsweise durch missbräuchliche Gewalteinwirkung oder Unfallsituationen, kann zu Schäden und dadurch zu dauerhaften Funktionsbeeinträchtigung führen. Die Auswertung der Reaktionskraft ermöglicht eine Überwachung, ob die maximale Belastung erreicht wird oder ein Überlastungsfall auftritt. Dadurch können Missbrauch und andere potentiell schädliche Krafteinwirkungen sicher erkannt werden. Überlastungen können mittels Anzeigemitteln signalisiert werden. Weiter ist es möglich, Gegenmaßnahmen gegen Überlast einzuleiten, beispielsweise bei einem erkannten Missbrauch die Lenkkraft zu reduzieren, um Schäden zu verhindern.

Die maximale Belastung kann als vorgegebener Grenzwert kann in einer Steuereinheit gespeichert sein. Durch Vergleich der gemessenen Reaktionskraft mit dem gespeicherten Grenzwert kann eine Überlastung zuverlässig erkannt werden. Daraus reultiert der Vorteil, dass potentielle Schäden und Funktionsbeeinträchtigungen einfach und sicher erkannt, und gegebenenfalls vermieden werden können.

Bei einem Lenksystem für ein Kraftfahrzeug umfassend ein Lenkgetriebe, in dem eine Zahnstange in Längsrichtung bewegbar ist und über mindestens eine Spurstange an mindestens eine lenkbares Rad gekuppelt ist, und das Lenkgetriebe mindestens ein zur Verbindung mit einem Karosserieteil ausgebildetes Befestigungsmittel aufweist, wobei eine Kraftmesseinrichtung zur Ermittlung der auf die Zahnstange wirkenden Zahnstangenkraft vorgesehen ist, ist erfindungsgemäß vorgesehen, dass mindestens ein Befestigungsmittel eine Kraftmesseinrichtung aufweist.

Das erfindungsgemäße Lenksystem ist ausgebildet, um das vorangehend beschriebene erfindungsgemäße Verfahren zu realisieren. Dabei können ausdrücklich sämtliche im Zusammenhang mit dem Verfahren ausdrücklich oder implizit offenbarten Vorrichtungsmerkmale bei dem Lenksystem realisiert sein.

Die Kraftmesseinrichtung ist ausgebildet zur Erfassung der zwischen dem Lenkgetriebe und dem Karosserieteil wirkenden Reaktionskraft, die dadurch auftritt, dass das Lenkgetriebe eine Lenkkraft auf die Räder ausübt, und von den Rädern auf das Lenkgetriebe übertragen wird.

Es ist bevorzugt, dass die Kraftmesseinrichtung mindestens einen elektrischen Kraftsensor aufweist. Der Kraftsensor kann einen Dehnungsmesstreifen, ein Piezoelement oder dergleichen aufweisen. Bevorzugt ist er mit dem Lenkgetriebe verbunden, so dass er bezüglich der auf das Lenkgetriebe wirkenden Reaktionskräfte im Kraftfluss zwischen dem Lenkgetriebe und dem Karosserieteil angeordnet ist. Anders ausgebrückt ist die Kraftmesseinrichtung zwischen dem Lenkgetriebe und dem Karosserieteil eingegliedert. Es können mehrere Kraftsensoren vorgesehen sein, beispielsweise an mehreren Befestigungspunkten. An jedem der Befestigungspunkte kann ein Befestigungsmittel zur Verbindung des Lenkgetriebes mit dem Karosserieteil vorgesehen sein, beispielsweise ein Befestigungsbolzen oder dergleichen.

Mittels eines oder mehrerer Kraftsensoren kann die zwischen dem Lenkgetriebe und dem Karosserieteil anliegende Reaktionskraft zuverlässig mit geringem Aufwand gemessen werden. Vorzugsweise können ein oder mehrere Kraftsensoren zur Erfassung der Kraft in Längsrichtung ausgebildet sein, zur Messung der in Längsrichtung wirkenden Zahnstangenkraft. Darüber hinaus können auch ein oder mehrere Kraftsensoren in Querrichtung, d.h. quer zur Längsrichtung angeordnet sein. Dadurch können auch auf die Zahnstange einwirkende Querkräfte überwacht werden.

Vorzugsweise kann das Lenkgetriebe mit dem Karosserieteil über mindestens ein Befestigungsmittel verbunden sein. Dadurch erfolgt die mechanische Verbindung des Lenkgetriebes mit dem Karosserieteil. Entsprechend werden praktisch die gesamten Reaktionskräfte über ein oder mehrere Befestigungsmittel übertragen. Es ist mit geringem Aufwand möglich, dass ein Befestigungsmittel einen elektrischen Kraftsensor aufweisen kann, oder selbst als ein solcher ausgebildet ist. Dabei ist es vorteilhaft, dass sämtliche Befestigungsmittel jeweils einen Kraftsensor aufweisen oder wirkungsmäßig mit einem solchen verbunden sind.

Es kann vorgesehen sein, dass das Lenkgetriebe elastisch verlagerbar an dem Karosserieteil gehalten ist und die Kraftmesseirichtung ausgebildet ist zur Erfassung einer relativen Verlagerung zwischen dem Lenkgetriebe und dem Karosserieteil. Das Lenkgetriebe ist über eine elastische Lagerung mit dem Karosserieteil verbunden. Diese ist derart kalibriert, dass eine definierte, eindeutig mit der Größe der Reaktionskraft korrelierte Verlagerung relativ zum Karosserieteil erfolgt, vorzugsweise in Längsrichtung. Durch die Kraftmesseinrichtung kann eine von der Reaktionskraft erzeugte bzw. davon abhängige relative Verlagerung zwischen dem Lenkgetriebe und dem Karosserieteil erfasst werden, die eindeutig mit der Zahnstangekraft korreliert ist. Diese Verlagerung kann einfach und zuverlässig unter Verwendung eines geeigneten Wegsensors messtechnisch erfasst werden, beispielsweise mittels eines Dehnungsmessstreifens oder dergleichen.

Es ist möglich, dass ein Befestigungsmittel einen Kraftsensor aufweist. Das Befestigungsmittel selbst kann als Kraftsensor ausgebildet sein, beispielsweise als sogenannter Kraftmessbolzen oder Lastmessbolzen, oder kann einen integrierten Kraftsensor aufweisen. Alternativ kann ein Kraftsensor zwischen zur Verbindung zusammenwirkenden Befestigungsmitteln angeordnet sein, beispielsweise zwischen einem Befestigungsbolzen und einer diesen aufnehmenden Aufnahmebohrung, beispielsweise als Kraftmesszelle, Druckdose oder dergleichen.

Eine vorteilhafte Ausführung kann beispielsweise dadurch realisiert werden, dass eine ringförmige Kraftmesszelle auf einem zylindrischen Bolzen angeordnet ist, die bevorzugt axial und radial gegen eine korrespondierende Aufnahmebohrung an dem Lenkgetriebe oder dem Karosserieteil abgestützt ist. Dadurch kann ein zuverlässige und montagefreundliche Anordnung realisiert sein.

Es ist bevorzugt, dass das Lenkgetriebe ein Gehäuse aufweist, in dem die Zahnstange gelagert ist, und welches Befestigungsmittel aufweist. Die Befestigungsmittel sind ausgebildet, um das Gehäuse mit dem Karosserietei zu verbinden. Sie können beispielsweise Befestigungsbohrungen umfassen, durch die mit dem Karosserieteil verbindbare Befestigungsbolzen hindurchgeführt sein können.

Es ist möglich, dass ein manueller und/oder motorischer Antrieb mit der Zahnstange wirkverbunden ist, wie oben beschrieben ist, um einen Hilfskraftantrieb oder einen Steer-by-Wire-Aktuator zu realisieren.

Es kann vorzugsweise vorgesehen sein, dass das Lenkgetriebe eine motorische Antriebseinheit aufweist. Diese dient zur motorischen Erzeugung der Zahnstangenkraft und kann bevorzugt einen elektrischen Motor mit einer rotierend antreibbaren Motorwelle umfassen, deren Rotation in eine Linearbewegung der Zahnstange umgesetzt wird. Hierzu kann eine an sich bekannte Getriebeanordnung vorgesehen sein, beispielsweise ein Spindeltrieb mit einer drehend antreibbaren Spindelmutter und einer mit der Zahnstange verbundenen Gewindespindel, oder ein Zahntrieb mit einem in eine Verzahnung der Zahnstange eingreifenden drehend antreibbaren Ritzel. Die motorische Antriebseinheit kann bevorzugt einschließlich des Motors und des Getriebes mit dem Lenkgetriebe baulich vereinigt ausgebildet sein.

Eine vorteilhafte Weiterbildung kann vorsehen, dass die Kraftmesseinrichtung eine Vergleichseinrichtung aufweist. Ein oder mehrere Kraftsensoren können an die Vergleichseinrichtung angeschlossen sein, die mit einer Steuereinheit verbunden oder integriert ausgebildet sein kann. In der Vergleichseinrichtung kann ein gespeicherter Grenzwert für die Reaktionkraft mit einem tatsächlich gemessenen Wert der Reaktionskraft verglichen werden. Ergibt der Vergleich ein Überschreiten dieses vorgegebenen, kritischen Grenzwerts, kann dies auf eine Überlastung hindeuten, beispielsweise durch Missbrauch oder eine Unfallsituation. Dabei kann ein Warnsignal ausgegeben werden. Zusätzlich oder alternativ können bevorzugt automatisiert Schutzmaßnahmen eingeleitet werden. Beispielsweise kann eine Reduzierung der Lenkkraft veranlasst werden, um missbräuchliche Überlastung zu verhindern.

Ein kritischer Grenzwert kann beispielsweise durch eine maximale Belastbarkeit der Spurstangen, des Lenkgetriebes oder sonstiger im Kraftfluss zwischen dem Lenkgetriebe und den lenkbaren Rädern eingegliederter Bauelemente definiert sein. Eine Überschreitung des kritischen Grenzwerts, beispielsweise durch missbräuchliche Gewalteinwirkung oder Unfallsituationen, kann zu Schäden und dadurch zu dauerhaften Funktionsbeeinträchtigung führen. Der Vergleich der Reaktionskraft in der Vergleichseinrichtung mit einem vorgegebenen Grenzwert ermöglicht eine Überwachung, ob die maximale Belastung erreicht wird oder ein Überlastungsfall auftritt. Dadurch können Missbrauch und andere potentiell schädliche Krafteinwirkungen sicher erkannt werden, so dass die Sicherheit erhöht werden kann.

### Beschreibung der Zeichnungen

Vorteilhafte Ausführungsformen der Erfindung werden im Folgenden anhand der Zeichnungen näher erläutert. Im Einzelnen zeigen:
- Fig. 1: ein Kraftfahrzeug-Lenksystem in einer schematischen perspektivischen Ansicht,
- Fig. 2: das Lenkgetriebe des Lenksystems gemäß Fig. 1 in einer schematisch teilweise auseinander gezogenen Darstellung,
- Fig. 3: einen vergrößerten Ausschnitt aus Fig. 2.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

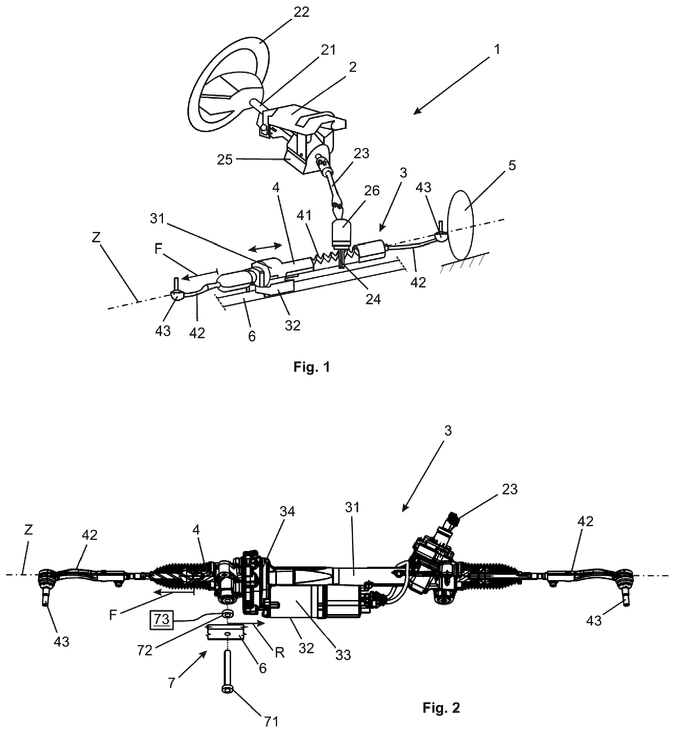

Fig. 1 zeigt eine schematische Darstellung eines Lenksystems 1 für ein Kraftfahrzeug, welches beispielhaft als elektromechanische Hilfskraftlenkung ausgebildet ist.

Das Lenksystem 1 umfasst eine Lenksäule 2, die an einer hier nicht gezeigten Karosserie eines Kraftfahrzeugs anbringbar ist. In der Lenksäule 2 ist eine Lenkspindel 21 drehbar gelagert, an deren bezüglich der Fahrrichtung hinteren, der Fahrerposition zugewandten Ende ein Lenkrad 22 zur Eingabe manueller Lenkbefehle angebracht ist.

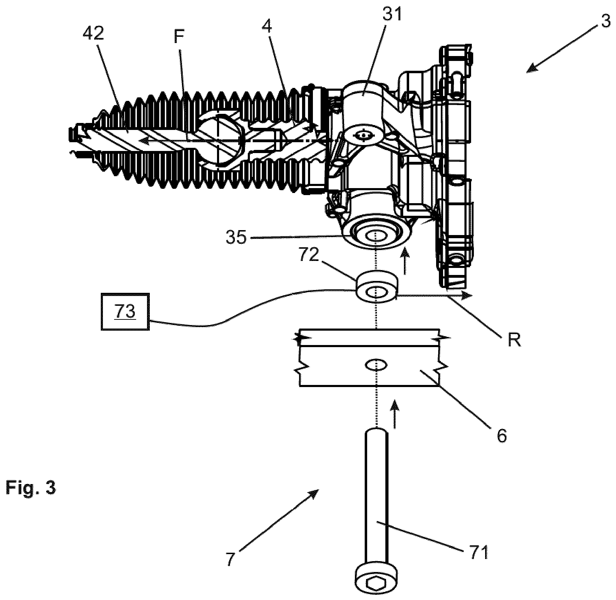

Die Lenkspindel 21 ist über eine Lenkwelle 23 mit einem Lenkgetriebe 3 gekuppelt, welches in Fig. 2 und 3 detailliert dargestellt ist.

Das Lenkgetriebe 3 weist eine Zahnstange 4 auf, die sich in einer Längsrichtung Z erstreckt, die gleichbedeutend auch als Zahnstangenrichtung oder Verstellrichtung bezeichnet wird.

Die Zahnstange 4 ist in einem Gehäuse 31 des Lenkgetriebes 3 - siehe Fig. 2 - in Längsrichtung Z verschiebbar gelagert, wie in Fig. 1 mit dem Doppelpfeil angedeutet ist. Ein an der Lenkwelle 23 angebrachtes Lenkritzel 24 greift in eine lineare Verzahnung 41 der Zahnstange 4 ein.

Eine Drehung des mit der Lenkwelle 23 verbundenen Lenkritzels 24 wird in eine lineare Verlagerung der Zahnstange 4 in dem Gehäuse 31 des Lenkgetriebes 3 umgesetzt.

Die Zahnstange 4 ist an ihren beiden Enden über Spurstangen 42 an Achsschenkel 43 von lenkbaren Rädern 5 angelenkt. Somit bewirkt eine Verlagerung der Zahnstange 4 in Längsrichtung Z einen Lenkeinschlag der Räder 5.

Zur Unterstützung der manuellen Lenkung mit einer motorisch erzeugten Hilfskraft kann ein elektrischer Antrieb 25, 26 oder 32 vorgesehen sein, üblicherweise nur an einer der drei genannten Positionen. Die Antriebe 25 und 26 sind als Hilfskraftantriebe ausgestaltet, durch die fahrsituationsabhängig ein das manuelle Lenkmoment unterstützendes motorisches Hilfsmoment in die Lenkspindel 21 bzw. die Lenkwelle 23 eingekoppelt werden kann. Das Gesamtmoment wird über das Lenkritzel 24 in die Zahnstange 4 eingekoppelt.

Alternativ kann ein elektrischer Antrieb 32 an dem Lenkgetriebe 3 angebracht sein. Dieser umfasst einen elektrischen Motor 33, der über ein - hier nur schematisch angedeutetes Getriebe 34 - eine lineare Antriebskraft auf die Zahnstange 4 ausüben kann. Hierzu kann beispielsweise zwischen dem Motor 33 und der Zahnstange 4 ein Spindeltrieb oder Zahntrieb vorgesehen sein.

Durch den Antrieb 32 kann eine das manuelle Lenkmoment unterstützende Hilfskraft in die Zahnstange 4 eingekoppelt werden. Alternativ ist es ausdrücklich möglich, das die Zahnstange 4 in einem Steer-by-Wire-Lenksystem durch den elektrischen Antrieb 32 des Lenkgetriebes 3 ausschließlich motorisch bewegt wird. In diesem Fall ist keine mechanische Verbindung mit dem Lenkrad 22 über die Lenkwelle 23 erforderlich.

Das Lenkgetriebe 3 ist mit einem Karosserieteil 6 verbunden, welches an der hier nicht weiter dargestellten Kraftfahrzeug-Karosserie festgelegt ist, beispielsweise an einem Stützrahmen oder dergleichen.

Die Verbindung des Lenkgetriebes 3 mit dem Karosserieteil 6 erfolgt erfindungsgemäß über ein Befestigungsmittel 7. Dieses umfasst einen Befestigungsbolzen 71 und einen Kraftsensor 72, der im gezeigten Beispiel eine ringförmige Kraftmesszelle aufweisen kann. Diese ist an eine elektrische Steuereinheit 73 angeschlossen, welche die mit der einwirkenden Kraft korrelierten elektrischen Messwerte des Kraftsensors 72 erfassen und auswerten kann. Ausgehend von den so gewonnenen Messwerten kann einer der der Antriebe 25, 26 oder 32 angesteuert werden. Es ist somit möglich, eine Überlast sicher zu erkennen. Es ist auch denkbar, einen mit dem Lenkrad 22 verbundenen, hier nicht dargestellten Feedback-Aktuator anzusteuern, der abhängig von der Fahrsituation ein Feedback- bzw. Rückstell-Moment erzeugen kann.

In dem in Fig. 3 gezeigten, schematisch in Richtung des Befestigungsbolzens 71 auseinander gezogenen Zustand, ist mit den Pfeilen angedeutet, wie der Befestigungsbolzen 71 durch eine Öffnung in dem Karosserieteil 6 hindurch in Eingriff gebracht werden kann mit dem Kraftsensor 72. Dieser kann in einer Aufnahme 35 des Gehäuses 31 bevorzugt formschlüssig aufgenommen und fixiert sein.

Beim Betätigen des Lenksystems 1 zur Erzeugung eines Lenkeinschlags wird die Zahnstange 4 manuell und motorisch mit einer Lenkkraft F beaufschlagt, die schematisch in Fig. 1 bis 3 eingezeichnet ist. Diese wird von der Zahnstange 4 beispielsweise in der gezeigten Ansicht nach links gerichtet auf die Spurstange 42 ausgeübt. Die Lenkkraft F entspricht im Wesentlichen der in der Längsrichtung Z wirkenden Zahnstangenkraft bzw. der Zahnstangenlast.

Das Lenkgetriebe 3 stützt sich mit einer der Lenkkraft F entgegengesetzten, dabei vom Betrag gleich großen Reaktionskraft R gegen das Karosserieteil 6 ab, wie in Fig. 2 und 3 angedeutet ist. Diese Reaktionskraft R wird zwischen dem Gehäuse 31 und dem Befestigungsbolzen 71 auf den Kraftsensor 72 übertragen. Aufgrund der eindeutigen Korrelation zwischen der Reaktionskraft R und der Lenkkraft F, die der Zahnstangenkraft entspricht, kann aus dem elektrischen Messwert des Kraftsensors 72 die Zahnstangenkraft ermittelt werden.

Alternativ ist es auch denkbar und möglich, dass der Befestigungsbolzen 71 selbst einen integrierten Kraftsensor aufweist, und als sogenannter Kraftmessbolzen oder Lastmessbolzen ausgebildet sein kann. In einer weiteren Alternative ist es möglich, dass das Lenkgetriebe 3 elastisch verlagerbar an dem Karosserieteil 6 gehalten ist und die Kraftmesseirichtung 7 ausgebildet ist zur Erfassung einer relativen Verlagerung zwischen dem Lenkgetriebe 3 und dem Karosserieteil 6, beispielsweise mittels eines Dehnungsmessstreifens oder dergleichen.

### Bezugszeichenliste

- 1: Lenksystem
- 2: Lenksäule
- 21: Lenkspindel
- 22: Lenkrad
- 23: Lenkwelle
- 24: Lenkritzel
- 25, 26: Antrieb
- 3: Lenkgetriebe
- 31: Gehäuse
- 32: Antrieb
- 33: Motor
- 34: Getriebe
- 35: Aufnahme
- 4: Zahnstange
- 41: Verzahnung
- 42: Spurstange
- 43: Achsschenkel
- 5: Rad
- 6: Karosserieteil
- 7: Befestigungsmittel
- 71: Befestigungsbolzen
- 72: Kraftsensor
- 73: Steuereinheit

- Z: Längsrichtung
- F: Lenkkraft
- R: Reaktionskraft

## Patentansprüche

1. Verfahren zur Messung der auf eine Zahnstange (4) eines Lenkgetriebes (3) eines Lenksystems (1) für ein Kraftfahrzeug wirkenden Zahnstangenkraft (F), bei dem die Zahnstange (4) in dem Lenkgetriebe (3) in Längsrichtung (Z) bewegbar ist und über mindestens eine Spurstange (42) an mindestens ein lenkbares Rad (5) gekuppelt ist,
**dadurch gekennzeichnet,**
**dass** die Zahnstangenkraft (F) als Reaktionskraft (R) zwischen dem Lenkgetriebe (3) und einem das Lenkgetriebe (3) in Längsrichtung (Z) abstützenden Karosserieteil (6) gemessen wird.

2. Verfahren nach Anspruch 1, **dadurch gekennzeichnet, dass** die Zahnstange (4) manuell und/oder motorisch antreibbar ist.

3. Verfahren nach einem der vorangehenden Ansprüche, **dadurch gekennzeichnet, dass** das Lenkgetriebe (3) eine motorische Antriebseinheit (32) aufweist.

4. Verfahren nach einem der vorangehenden Ansprüche, **dadurch gekennzeichnet, dass** die Reaktionskraft (R) mittels mindestens eines elektrischen Kraftsensors (72) gemessen wird.

5. Verfahren nach einem der vorangehenden Ansprüche, **dadurch gekennzeichnet, dass** die Reaktionskraft (R) an einem Befestigungsmittel (7) gemessen wird, mit dem das Lenkgetriebe (3) mit dem Karosserieteil (6) verbunden ist.

6. Verfahren nach einem der vorangehenden Ansprüche, **dadurch gekennzeichnet, dass** das Lenkgetriebe (3) elastisch verlagerbar an dem Karosserieteil (6) gehalten ist und eine von der Reaktionskraft (R) erzeugte relative Verlagerung zwischen dem Lenkgetriebe (3) und dem Karosserieteil (6) erfasst wird.

7. Verfahren nach einem der vorangehenden Ansprüche, **dadurch gekennzeichnet, dass** die Reaktionskraft (R) ausgewertet wird zur Detektierung einer Überlastung.

8. Lenksystem (1) für ein Kraftfahrzeug umfassend ein Lenkgetriebe (3), in dem eine Zahnstange (4) in Längsrichtung (Z) bewegbar ist und über mindestens eine Spurstange (42) an mindestens eine lenkbares Rad (5) gekuppelt ist, und das Lenkgetriebe (3) mindestens ein zur Verbindung mit einem Karosserieteil (6) ausgebildetes Befestigungsmittel (7) aufweist, wobei eine Kraftmesseinrichtung (71, 72) zur Ermittlung der auf die Zahnstange (3) wirkenden Zahnstangenkraft (F) vorgesehen ist, **dadurch gekennzeichnet, dass** mindestens ein Befestigungsmittel (7) eine Kraftmesseinrichtung (72) aufweist.

9. Lenksystem nach Anspruch 8, **dadurch gekennzeichnet, dass** die Kraftmesseinrichtung (7) mindestens einen elektrischen Kraftsensor (72) aufweist.

10. Lenksystem nach einem der Ansprüche 8 bis 9, **dadurch gekennzeichnet, dass** das Lenkgetriebe (3) elastisch verlagerbar an dem Karosserieteil (6) gehalten ist und die Kraftmesseirichtung (7) ausgebildet ist zur Erfassung einer relativen Verlagerung zwischen dem Lenkgetriebe (3) und dem Karosserieteil (6).

11. Lenksystem nach einem der Ansprüche 8 bis 10, **dadurch gekennzeichnet, dass** ein Befestigungsmittel (7) einen Kraftsensor (72) aufweist.

12. Lenksystem nach einem der Ansprüche 8 bis 11, **dadurch gekennzeichnet, dass** Das Lenkgetriebe (3) ein Gehäuse (31) aufweist, in dem die Zahnstange (4) gelagert ist, und welches Befestigungsmittel (7) aufweist.

13. Lenksystem nach einem der Ansprüche 8 bis 12, **dadurch gekennzeichnet, dass** ein manueller und/oder motorischer Antrieb (25, 26, 32) mit der Zahnstange (4) wirkverbunden ist.

14. Lenksystem nach einem der Ansprüche 8 bis 13, **dadurch gekennzeichnet, dass** das Lenkgetriebe (3) eine motorische Antriebseinheit (32) aufweist.

15. Lenksystem nach einem der Ansprüche 8 bis 14, **dadurch gekennzeichnet, dass** die Kraftmesseinrichtung (72) eine Vergleichseinrichtung aufweist.

## Claims

1. Method for measuring the rack force (F) acting on a rack (4) of a steering gear (3) of a steering system (1) for a motor vehicle, in which the rack (4) is movable in the steering gear (3) in the longitudinal direction (Z) and is coupled to at least one steerable wheel (5) via at least one tie rod (42),
**characterized in**
**in that** the rack force (F) is measured as a reaction force (R) between the steering gear (3) and a body part (6) supporting the steering gear (3) in the longitudinal direction (Z).

2. Method according to claim 1, **characterized in that** the rack (4) can be driven manually and/or by a motor.

3. Method according to one of the preceding claims, **characterized in that** the steering gear (3) has a motor-driven drive unit (32).

4. Method according to one of the preceding claims, **characterized in that** the reaction force (R) is measured by means of at least one electrical force sensor (72).

5. Method according to one of the preceding claims, **characterized in that** the reaction force (R) is measured at a fastening means (7) by which the steering gear (3) is connected to the body part (6).

6. Method according to one of the preceding claims, **characterized in that** the steering gear (3) is held elastically displaceably on the body part (6) and a relative displacement between the steering gear (3) and the body part (6) generated by the reaction force (R) is detected.

7. Method according to one of the preceding claims, **characterized in that** the reaction force (R) is evaluated to detect an overload.

8. Steering system (1) for a motor vehicle comprising a steering gear (3), in which a rack (4) is movable in the longitudinal direction (Z) and is coupled to at least one steerable wheel (5) via at least one track rod (42), and the steering gear (3) has at least one fastening means (7) designed for connection to a body part (6), wherein a force measuring device (71, 72) is provided for determining the rack force (F) acting on the steering rack (3), **characterized in that** at least one fastening means (7) has a force measuring device (72).

9. Steering system according to claim 8, **characterized in that** the force measuring device (7) comprises at least one electrical force sensor (72).

10. Steering system according to one of claims 8 to 9, **characterized in that** the steering gear (3) is held elastically displaceably on the body part (6) and the force measuring device (7) is designed to detect a relative displacement between the steering gear (3) and the body part (6).

11. Steering system according to one of claims 8 to 10, **characterized in that** a fastening means (7) has a force sensor (72).

12. Steering system according to one of claims 8 to 11, **characterized in that** the steering gear (3) has a housing (31) in which the rack (4) is mounted and which has fastening means (7).

13. Steering system according to one of claims 8 to 12, **characterized in that** a manual and/or motor drive (25, 26, 32) is operatively connected to the rack (4).

14. Steering system according to any one of claims 8 to 13, **characterized in that** the steering gear (3) comprises a motorized drive unit (32).

15. Steering system according to one of claims 8 to 14, **characterized in that** the force measuring device (72) comprises a comparison device.

## Revendications

1. Procédé de mesure de la force de crémaillère (F) agissant sur une crémaillère (4) d'un mécanisme de direction (3) d'un système de direction (1) pour un véhicule automobile, dans lequel la crémaillère (4) est mobile dans le sens longitudinal (Z) dans le mécanisme de direction (3) et est couplée à au moins une roue dirigeable (5) par l'intermédiaire d'au moins une barre d'accouplement (42),
**caractérisé en ce que**
**en ce que** la force de crémaillère (F) est mesurée en tant que force de réaction (R) entre le mécanisme de direction (3) et un élément de carrosserie (6) supportant le mécanisme de direction (3) dans la direction longitudinale (Z).

2. Procédé selon la revendication 1, **caractérisé en ce que** la crémaillère (4) peut être entraînée manuellement et/ou par un moteur.

3. Procédé selon l'une des revendications précédentes, **caractérisé en ce que** le mécanisme de direction (3) comporte une unité d'entraînement motorisée (32).

4. Procédé selon l'une des revendications précédentes, **caractérisé en ce que** la force de réaction (R) est mesurée au moyen d'au moins un capteur de force électrique (72).

5. Procédé selon l'une des revendications précédentes, **caractérisé en ce que** la force de réaction (R) est mesurée sur un moyen de fixation (7) par lequel le mécanisme de direction (3) est relié à l'élément de carrosserie (6).

6. Procédé selon l'une des revendications précédentes, **caractérisé en ce que** le mécanisme de direction (3) est maintenu sur l'élément de carrosserie (6) de manière à pouvoir être déplacé élastiquement et **en ce qu'**un déplacement relatif entre le mécanisme de direction (3) et l'élément de carrosserie (6) généré par la force de réaction (R) est détecté.

7. Procédé selon l'une des revendications précédentes, **caractérisé en ce que** la force de réaction (R) est évaluée pour détecter une surcharge.

8. Système de direction (1) pour un véhicule automobile comprenant un mécanisme de direction (3) dans lequel une crémaillère (4) est mobile dans la direction longitudinale (Z) et est couplée à au moins une roue directrice (5) par l'intermédiaire d'au moins une barre d'accouplement (42), et le mécanisme de direction (3) présente au moins un moyen de fixation (7) conçu pour être relié à une partie de la carrosserie (6), un dispositif de mesure de force (71, 72) étant prévu pour déterminer la force de crémaillère (F) agissant sur la crémaillère (3), **caractérisé en ce qu'**au moins un moyen de fixation (7) présente un dispositif de mesure de force (72).

9. Système de direction selon la revendication 8, **caractérisé en ce que** le dispositif de mesure de force (7) comporte au moins un capteur de force électrique (72).

10. Système de direction selon l'une des revendications 8 à 9, **caractérisé en ce que** le mécanisme de direction (3) est maintenu sur l'élément de carrosserie (6) de manière à pouvoir être déplacé élastiquement et **en ce que** le dispositif de mesure d'effort (7) est configuré pour détecter un déplacement relatif entre le mécanisme de direction (3) et l'élément de carrosserie (6).

11. Système de direction selon l'une des revendications 8 à 10, **caractérisé en ce qu'**un moyen de fixation (7) comporte un capteur d'effort (72).

12. Système de direction selon l'une des revendications 8 à 11, **caractérisé en ce que** Le mécanisme de direction (3) comporte un boîtier (31) dans lequel est logée la crémaillère (4) et qui comporte des moyens de fixation (7).

13. Système de direction selon l'une des revendications 8 à 12, **caractérisé en ce qu'**un entraînement manuel et/ou motorisé (25, 26, 32) est relié fonctionnellement à la crémaillère (4).

14. Système de direction selon l'une des revendications 8 à 13, **caractérisé en ce que** le mécanisme de direction (3) comporte une unité d'entraînement motorisée (32).

15. Système de direction selon l'une des revendications 8 à 14, **caractérisé en ce que** le dispositif de mesure d'effort (72) comporte un dispositif de comparaison.
